# EUROPÄISCHE PATENTSCHRIFT

(11) **EP 3 155 031 B1**
(45) Veröffentlichungstag und Bekanntmachung des Hinweises auf die Patenterteilung: **19.08.2020**
(21) Anmeldenummer: 15726209.8
(22) Anmeldetag: 09.06.2015
(51) Int. Cl.: C08G 18/62, C08G 18/73, C08G 18/75, C08G 18/80, C08G 18/22, C08G 18/38, C09D 175/04

(54) **POLYISOCYANATE MIT THIOALLOPHANATSTRUKTUR**
POLYISOCYANATES WITH THIOALLOPHANATE STRUCTURE
POLYISOCYANATE À STRUCTURE THIOALLOPHANATE

(30) Priorität: 13.06.2014 EP 14172296
(43) Veröffentlichungstag der Anmeldung: 19.04.2017
(73) Patentinhaber: Covestro Deutschland AG, 51373 Leverkusen (DE)
(72) Erfinder: LAAS, Hans Josef, 51519 Odenthal (DE); GRESZTA-FRANZ, Dorota, 42659 Solingen (DE)
(74) Vertreter: Levpat
(86) Internationale Anmeldenummer: PCT/EP2015/062765
(87) Internationale Veröffentlichungsnummer: WO 2015/189169

(56) Entgegenhaltungen:
- EP-A2- 0 422 836
- US-A- 4 866 103
- US-B1- 6 639 040
- LAAS H J ET AL: "ZUR SYNTHESE ALIPHATISCHER POLYISOCYANATE-LACKPOLYISOCYANATE MIT BIURET-, ISOCYANURAT- ODER URETDIONSTRUKTUR. ÖTHE SYNTHESIS OF ALIPHATIC POLYISOCYANATES CONTAINING BIURET, ISOCYANURATE OR URETDIONE BACKBONES FOR USE IN COATINGS", JOURNAL FUER PRAKTISCHE CHEMIE, WILEY VCH, WEINHEIM, DE, Bd. 336, Nr. 3, 1. Januar 1994 (1994-01-01), Seiten 185-200, XP000441642, ISSN: 1436-9966, DOI: 10.1002/PRAC.19943360302

## Beschreibung

Schwefel enthaltende Polymere besitzen eine Reihe technisch bemerkenswerter Eigenschaften. Durch den Einbau von Schwefelatomen in ein Polymergerüst lassen sich beispielsweise die mechanischen und thermischen Beständigkeiten eines Kunststoffs sowie die Haftung auf Metallen deutlich verbessern. Darüberhinaus zeigen Schwefel enthaltende Polymere in der Regel auch ausgezeichnete optische Eigenschaften und eine hohe Biokompatibilität.

Auch in der Polyurethanchemie ist die Verwendung Schwefel enthaltender Reaktivkomponenten bereits bekannt.

Beispielsweise kommen Polythiole als Reaktionspartner für unterschiedliche Polyisocyanatkomponenten bei der Herstellung transparenter hoch lichtbrechender Polythiourethan-Linsen zum Einsatz (z. B. EP-A 0 422 836, EP-A 0 802 431, EP-A 1 670 852, EP-A 2 065 415 oder WO 2010/148424).

Schwefel enthaltende Polyisocyanate wurden ebenfalls bereits in einer Reihe von Veröffentlichungen beschrieben.

Nach der Lehre der JP-A 04-117353 eignet sich insbesondere 1,4-Bis(isocyanatomethylthio)benzol als Ausgangsisocyanat zur Herstellung optischer Materialien. Weitere speziell zur Herstellung hoch lichtbrechender Kunststofflinsen entwickelte schwefelhaltige Diisocyanate sind beispielsweise Bis(4-isocyanatomethylthiophenyl)sulfid (JP-A 04-117354), 1,2-Bis(2-isocyanatoethylthio)ethan, Bis[2-(isocyanatomethylthio)ethyl]sulfid, Bis(isocyanatomethylthio)phenylmethan, 1,1,2,2-Tetrakis(isocyanatomethyl-thio)ethan und 2,2,5,5,-Tetrakis(isocyanatomethylthio)-1,4-dithian (EP-A 0713 105), 2,5-Diisocyanato-1,4-dithian (JP-A 09-071631), Tris(isocyanatomethylthio)methan (JP-A 09-071632), das tricyclische Diisocyanat 2,8-Diisocyanato-4-thiatricyclo[3.2.1.0^{3,6}]octan (JP-A 2001-002674) sowie spezielle Diisocanatoalkyltrithiane (JP-A 2008-174520).

Diese schwefelhaltige Diisocyanate sind allerdings nur über sehr aufwändige Syntheserouten zugänglich und kommerziell nicht verfügbar.

Isocyanatfunktionelle Semiprepolymere auf Basis von aliphatischen, cycloaliphatischen und/oder aromatischen Diisocyanaten und Polythiolen sind Gegenstand der WO 01/36508.

Diese Prepolymere, die Urethan-, Thiourethan-, Thiocarbamat- und/oder Dithiourethanstrukturen enthalten können, dienen in Kombination mit aromatischen Diaminen der Herstellung photochromer optischer Materialien. Aufgrund ihres hohen Restgehaltes an niedermolekularen monomeren Diisocyanaten, die als giftige Arbeitsstoffe eingestuft sind und zum Teil einen hohen Dampfdruck aufweisen, ist die Verarbeitung derartiger NCO-Prepolymere nur unter Einhaltung eines großen sicherheitstechnischen Aufwandes möglich.

Die US 4,866,103 ist auf Allophanatgruppen aufweisende Polyisocyanatzusammensetzungen zur Schaumherstellung gerichtet und erwähnt den Begriff "Thioallophanatgruppe" nur generisch.

Die US 6,639,040 B1 beschreibt Allophanatgruppen enthaltende Polyisocyanate, die aus Alkoholen und Diphenylmethandiisocyanat gebildet werden.

Toxikologisch unbedenkliche schwefelhaltige Polyisocyanate, die in üblichen Anwendungen von Polyisocyanaten, beispielsweise als Vernetzerkomponenten für Zweikomponenten Polyurethanlacke und -beschichtungen, breit einsetzbar wären, sind bisher nicht bekannt.

Aufgabe der vorliegenden Erfindung war es daher, neue monomerarme Polyisocyanate mit chemisch gebundenem Schwefel zur Verfügung zu stellen, die aus gut verfügbaren Rohstoffen in einem einfachen Verfahren sicher und reproduzierbar herstellbar sind und sich als Ausgangskomponenten für eine Vielzahl unterschiedlicher Anwendungen eignen.

Diese Aufgabe konnte durch die Bereitstellung der nachfolgend näher beschriebenen Polyisocyanate bzw. des Verfahrerns zu ihrer Herstellung gelöst werden. Die nachstehend näher beschriebene Erfindung basiert auf der überraschenden Beobachtung, dass sich Thiole mit molar überschüssigen Mengen einer Isocyanatkomponente bereits unter unerwartet milden Reaktionsbedingungen sehr selektiv zu Thioallophanatgruppen umsetzen lassen, wobei lagerstabile, farbhelle Produkte erhalten werden, die sich durch niedrige Viskositäten auszeichnen. Derartige Polyisocyanate mit Thioallophanatstruktur waren bisher nicht bekannt.

Offenbart sind daher Polyisocyanate mit aliphatisch, cycloaliphatisch, araliphatisch und/oder aromatisch gebundenen Isocyanatgruppen, enthaltend Thioallophanatstrukturen der Formel (I)

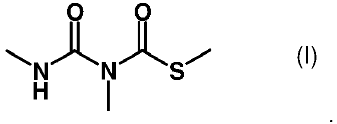

Gegenstand der Erfindung ist ein Verfahren zur Herstellung solcher Polyisocyanate durch Umsetzung von
A) mindestens einem Di- und/oder Polyisocyanat mit aliphatisch, cycloaliphatisch, araliphatisch und/oder aromatisch gebundenen Isocyanatgruppen mit
B) mindestens einer mindestens eine Mercaptogruppe tragenden Verbindung, gegebenenfalls in Gegenwart
C) eines die Bildung von Thioallophanatgruppen beschleunigenden Katalysators
unter Einhaltung eines Äquivalentverhältnisses von Isocyanatgruppen zu gegenüber Isocyanaten reaktiven Gruppen von 4 : 1 bis 200 : 1.

Gegenstand der Erfindung ist auch die Verwendung von Polyisocyanaten mit aliphatisch, cycloaliphatisch, araliphatisch und/oder aromatisch gebundenen Isocyanatgruppen, enthaltend Thioallophanatstrukturen der Formel (I), 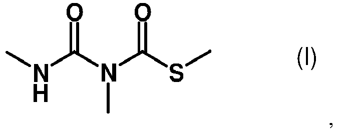 als Ausgangskomponenten bei der Herstellung von Polyurethankunststoffen, insbesondere als Vernetzerkomponente in Polyurethanlacken und -beschichtungen.

Ausgangsverbindungen A) für das erfindungsgemäße Verfahren sind beliebige Diisocyanate mit aliphatisch, cycloaliphatisch, araliphatisch und/oder aromatisch gebundenen Isocyanatgruppen, die nach beliebigen Verfahren, z. B. durch Phosgenierung oder auf phosgenfreiem Weg, beispielsweise durch Urethanspaltung, hergestellt werden können.

Geeignete Diisocyanate A) sind beispielsweise solche des Molekulargewichtsbereiches 140 bis 400 g/mol, wie z. B. 1,4-Diisocyanatobutan, 1,5-Diisocyanatopentan, 1,6-Diisocyanatohexan (HDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol, 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

Ebenfalls geeignete Ausgangskomponenten A) sind beliebige, durch Modifizierung der vorstehend genannten einfachen aliphatischen, cycloaliphatischen, araliphatischen und/oder aromatischen Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, den Schriften DE-A 16 70 666, 19 54 093, 24 14 413, 24 52 532, 26 41 380, 37 00 209, 39 00 053 und 39 28 503 oder den EP-A 336 205, 339 396 und 798 299 beispielhaft beschrieben sind.

Als Ausgangskomponente A) bevorzugt sind die genannten einfachen Diisocyanate mit aliphatisch und/oder cycloaliphatisch gebundenen Isocyanatgruppen.

Besonders bevorzugte Diisocyanate A) für das erfindungsgemäße Verfahren sind 1,5-Diisocyanaotpentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Zur Herstellung der offenbarten Polyisocyanate, werden die vorstehend beschriebenen Di- und/oder Polyisocyanate A) mit beliebigen mindestens eine Mercaptogruppe tragenden Verbindungen B) umgesetzt. Bei diesen mercaptofunktionellen Verbindungen B) handelt es sich um beliebige Monothiole und/oder Polythiole, die gegebenenfalls als weitere funktionelle Gruppe zusätzlich mindestens eine Hydroxylgruppe tragen können, mit einer auf die Summe an vorliegenden Thiol- und Hydroxylgruppen bezogenen (mittleren) Funktionalität bis zu 6, vorzugsweise von 1 bis 4, besonders bevorzugt von 1 bis 3 aufweisen.

Geeignete Komponenten B) sind beispielsweise **einfache Alkanthiole,** wie z. B. Methylmercaptan, Ethylmercaptan, Allylmercaptan, Methallylmercaptan, 1-Propanthiol, 2-Propanthiol, 1-Butanthiol, 2-Butanthiol, Isobutylmercaptan, tert.-Butylmercaptan, 1-Pentanthiol, 2-Pentanthiol, 2-Methyl-1-butanthiol, 3-Methyl-1-butanthiol, 1-Hexanthiol, 2-Hexanthiol, 3-Hexanthiol, 4-Methylpentan-2-thiol, 3,3-Dimethylbutan-1-thiol, 2-Ethyl-butan-1-thiol, 4-Methyl-1-pentanthiol, 3-Methylpentan-2-thiol, 1-Heptanthiol, 2-Heptanthiol, 1-Octathiol, 2-Octanthiol, 2-Ethyl-1-hexanthiol, 1-Nonanthiol, 2-Nonanthiol, 1-Decanthiol, 3-Decanthiol, 1-Undecanthiol, Undec-10-en-1-thiol, 1-Dodecanthiol, 2-Dodecanthiol, tert-Dodecylthiol, N-Tridecylmercaptan, 1-Tetradecanthiol, tert-Tetradecanthiol, 1-Pentadecanthiol, 1-Hexadecanthiol, Heptadecylmercaptan, 1-Octadecanthiol, 1-Eicosanthiol, Cyclopentanthiol, 2-Methylcyclopentan-1-thiol, 3-Methylcyclopentan-1-thiol, Cyclopentylmethanthiol, 1-Cyclopentylethan-1-thiol, Cyclohexanthiol, 2-Methylcyclohexan-1-thiol, 3-Methylcyclohexan-1-thiol, 4-Methylcyclohexan-1-thiol, Cyclohexylmethanthiol, Cycloheptanthiol, 2,3-Dimethylcyclohexan-1-thiol, 2,4-Dimethylcyclohexan-1-thiol, 2,5-Dimethylcyclohexan-1-thiol, 2,6-Dimethylcyclohexan-1-thiol, 3,3-Dimethylcyclohexan-1-thiol, 4,4-Dimethylcyclohexan-1-thiol, 2-Ethylcyclohexan-1-thiol, 3-Ethylcyclohexan-1-thiol, Cyclooctanthiol, Bicyclo[2.2.1]heptan-2-ylmethanthiol.Methandithiol, 1,2-Ethandithiol, 1,1-Propandithiol, 1,2-Propandithiol, 1,3-Propandithiol, 2,2-Propandithiol, 1,4-Butandithiol, 2,3-Butandithiol, 1,5-Pentandithiol, 1,6-Hexandithiol, 1,2,3-Propantrithiol, 1,1-Cyclohexandithiol, 1,2-Cyclohexandithiol, 2,2-Dimethylpropan-1,3-dithiol, 3,4-Dimethoxybutan-1,2-dithiol und 2-Methylcyclohexan-2,3-dithiol, **Etherthiole,** wie z. B. 2-Methoxyethanthiol, 2-Ethoxyethanthiol, 2-Butoxyethanthiol, 2-(3-Methylbutoxy)ethanthiol, 2-(2-Methoxyethoxy)ethanethiol, Bis(2-mercaptoethyl)ether, 2,5,8,11-Tetraoxatridecane-13-thiol, 2,5,8,11,14-pentaoxahexadecane-16-thiol, 2,5,8,11,14,17-hexaoxanonadecane-19-thiol und/oder 2,5,8,11,14,17,20-heptaoxadocosane-22-thiol, **Thioethergruppen enthaltende Polythiole,** wie z. B. 2,4-Dimercapto-methyl-1,5-dimercapto-3-thiapentan, 4-Mercaptomethyl-1,8-dimercapto-3,6-dithiaoctan, 4,8-Dimercaptomethyl-1,11-dimercapto-3,6,9-trithiaundecan, 4,7-Dimercaptomethyl-1,11-dimer-capto-3,6,9-trithiaundecan, 5,7-Dimercaptomethyl-1,11-dimercapto-3,6,9-trithiaundecan, 5,6-Bis-(mercaptoethylthio)-1,10-dimercapto-3,8-dithiadecan, 4,5-Bis-(mercaptoethylthio)-1,10-dimercapto-3,8-dithiadecan, Tetrakis(mercaptomethyl)methan, 1,1,3,3-Tetrakis(mercaptomethylthio)propan, 1,1,5,5-Tetrakis(mercaptomethylthio)-3-thiapentan, 1,1,6,6-Tetrakis(mercaptomethylthio)-3,4-dithia-hexan, 2-Mercaptoethylthio-1,3-dimercaptopropan, 2,3-Bis(mercaptoethylthio)-1-mercaptopropan, 2,2-Bis(mercaptomethyl)-1,3-dimercaptopropan, Bis-(mercaptomethyl)sulfid, Bis(mercaptomethyl)disulfid, Bis(mercaptoethyl)sulfid, Bis(mercapto-ethyl)disulfid, Bis(mercaptopropyl)sulfid, Bis(mercaptopropyl)disulfid, Bis(mercaptomethyl-thio)methan, Tris(mercaptomethylthio)methan, Bis(mercaptoethylthio)methan, Tris(mercapto-ethylthio)methan, Bis(mercaptopropylthio)methan, 1,2-Bis(mercaptomethylthio)ethan, 1,2-Bis-(mercaptoethylthio)ethan, 2-Mercaptoethylthio)ethan, 1,3-Bis(mercaptomethylthio)propan, 1,3-Bis(mercaptopropylthio)propan, 1,2,3-Tris(mercaptomethylthio)propan, 1,2,3-Tris(mercapto-ethylthio)propan, 1,2,3-Tris(mercaptopropylthio)propan, Tetrakis(mercaptomethylthio)methan, Tetrakis(mercaptoethylthiomethyl)methan, Tetrakis(mercaptopropylthiomethyl)methan, 2,5-Dimercapto-1,4-dithian, 2,5-Bis(mercaptomethyl)-1,4-dithian und dessen gemäß JP-A 07118263 erhältliche Oligomere, 1,5-Bis(mercaptopropyl)-1,4-dithian, 1,5-Bis(2-mercaptoethylthiomethyl)-1,4-dithian, 2-Mercaptomethyl-6-mercapto-1,4-dithiacycloheptan, 2,4,6-Trimercapto-1,3,5-trithian, 2,4,6-Trimercaptomethyl-1,3,5-trithian und 2-(3-Bis(mercaptomethyl)-2-thiapropyl)-1,3-dithiolan, **Polyesterthiole,** wie z. B. Ethyl-2-mercaptoacetat, Propyl-2-mercaptoacetat, Ethylenglycol-bis(2-mercaptoacetat), Ethylenglycol-bis(3-mercaptopropionat), Diethylenglycol(2-mercaptoacetat), Diethylenglycol(3-mercaptopropionat), 2,3-Dimercapto-1-propanol(3-mercaptopropionat), 3-Mercapto-l,2-propandiol-bis(2-mercapto-acetat), 3-Mercapto-1,2-propandiol-bis(3-mercaptopropionat), Trimethylolpropan-tris(2-mercapto-acetat), Trimethylolpropan-tris(3-mercaptopropionat), Trimethylolethan-tris(2-mercaptoacetat), Tri-methylol-ethan-tris(3-mercaptopropionat), Pentaerythrit-tetrakis(2-mercaptoacetat), Pentaerythrit-tetrakis(3-mercaptopropionat), Glycerin-tris(2-mercaptoacetat), Glycerin-tris(3-mercaptopropionat), 1,4-Cyclohexandiol-bis(2-mercaptoacetat), 1,4-Cyclohexandiol-bis(3-mercaptopropionat), Hydroxymethylsulfid-bis(2-mercaptoacetat), Hydroxymethylsulfid-bis(3-mercaptopropionat), Hydroxyethyl-sulfid(2-mercaptoacetat), Hydroxyethylsulfid(3-mercaptopropionat), Hydroxymethyldisulfid(2-mercaptoacetat), Hydroxymethyldisulfid(3-mercaptopropionat), (2-Mercaptoethylester)thioglycolat, Bis(2-mercaptoethylester)thiodipropionat und Tris[2-(3-mercaptopropionyloxy)ethyl]isocyanurate, **aromatische Thioverbindungen,** wie z. B. 1,2-Dimercaptobenzol, 1,3-Dimercaptobenzol, 1,4-Dimercaptobenzol, 1,2-Bis(mercaptomethyl)benzol, 1,4-Bis(mercaptomethyl)benzol, 1,2-Bis(mercaptoethyl)benzol, 1,4-Bis(mercaptoethyl)benzol, 1,2,3-Trimercaptobenzol, 1,2,4-Trimercaptobenzol, 1,3,5-Trimercaptobenzol, 1,2,3-Tris-(mercaptomethyl)benzol, 1,2,4-Tris(mercaptomethyl)benzol, 1,3,5-Tris(mercaptomethyl)benzol, 1,2,3-Tris(mercaptoethyl)benzol, 1,3,5-Tris(mercaptoethyl)benzol, 1,2,4-Tris(mercaptoethyl)-benzol, 2,5-Toluoldithiol, 3,4-Toluoldithiol, 1,4-Naphthalindithiol, 1,5-Naphthalindithiol, 2,6-Naphthalindithiol, 2,7-Naphthalinithiol, 1,2,3,4-Tetramercaptobenzol, 1,2,3,5-Tetraercapto-benzol, 1,2,4,5-Tetramercaptobenzol, 1,2,3,4-Tetrakis(mercaptomethyl)benzol, 1,2,3,5-Tetrakis-(mercaptomethyl)benzol, 1,2,4,5-Tetrakis(mercaptomethyl)benzol, 1,2,3,4-Tetrais(mercaptoethyl)benzol, 1,2,3,5-Tetrakis(mercaptoethyl)benzol, 1,2,4,5-Tetrakis(mercaptoethyl)benzol, 2,2'-Dimercaptobiphenyl und 4,4'-Dimercaptobiphenyl sowie **Hydroxythiole,** wie z. B. 2-Mercaptoethanol, 3-Mercapto-1-propanol, 2-Mercapto-1-propanol, 1-Mercapto-2-propanol, 4-Mercapto-l-butanol, 1-Mercaptobutan-2-ol, 6-Mercapto-1-Hexanol, 8-Mercapto-1-octanol, 9-Mercapto-l-nonanol, 11-Mercapto-1-undecanol, 1-Mercaptododecan-2-ol, 16-Mercapto-1-hexadecanol, 1-Mercaptohexadecan-2-ol, 1,3-Dimercapto-2-propanol, 2,3-Dimercaptopropanol, Dithioerythritol, 2-Mercaptoethoxyethanol und 2-Hydroxyethylmercaptoacetat.

Im Sinne der vorliegenden Erfindung sollen als mercaptofunktionelle Verbindungen B) mit zusätzlich mindestens einer Hydroxylgruppe auch Abmischungen der vorstehend beispielhaft genannten Thiole mit Mono- und Polyolen gelten, sofern die resultierenden Abmischungen den oben gemachten Angaben bezüglich der (mittleren) Funktionalität entsprechen.

Geeignete Mono- und Polyole, die mit Thiolen der genannten Art zu mercaptofunktionellen Verbindungen B) abgemischt werden können, sind beispielsweise einfache mehrwertige Alkohole mit 2 bis 14, vorzugsweise 4 bis 10 Kohlenstoffatomen, wie z. B. 1,2-Ethandiol, 1,2- und 1,3-Propandiol, die isomeren Butandiole, Pentandiole, Hexandiole, Heptandiole und Octandiole, 1,10-Decandiol, 1,12-Dodecandiol, 1,2- und 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydrobisphenol), 1,2,3-Propantriol, 1,2,4-Butantriol, 1,1,1-Trimethylolethan, 1,2,6-Hexantriol, 1,1,1-Trimethylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, 3(4),8(9)-Bis-(hydroxymethyl)-tricyclo-[5.2.1.02,6]decane, Di-Trimethylolpropan, 2,2-Bis(hydroxymethyl)-1,3-propandiol (Pentaerythrit), 2,2,6,6-Tetra-kis(hydroxymethyl)-4-oxa-heptan-1,7-diol (Dipentaerythrit), Mannitol oder Sorbitol, niedermolekulare Etheralkohole, wie z. B. Diethylenglykol, Triethylenglykol, Tetraethylenglykol, Dipropylenglykol und Dibutylenglykol, oder niedermolekulare Esteralkohole, wie z. B. Hydroxypivalinsäureneopentylglykolester.

Für das erfindungsgemäße Verfahren ebenfalls geeignete mercaptofunktionelle Verbindungen B) sind darüberhinaus aber auch Abmischungen von Thiolen der genannten Art mit den üblichen aus der Polyurethanchemie bekannten polymeren Polyetherpolyolen, Polyesterpolyolen, Polycarbonatpolyolen und/oder Polyacrylatpolyolen, die üblicherweise ein zahlenmittleres Molekulargewicht von 200 bis 22000, vorzugsweise von 250 bis 18000, besonders bevorzugt von 250 bis 12000 aufweisen, sofern sie den oben gemachten Angaben bezüglich der (mittleren) Funktionalität entsprechen.

Bevorzugte mercaptofunktionellen Verbindungen B) sind Polythioetherthiole, Polyesterthiole und Hydroxythiole der genannnten Art. Besonders bevorzugte Verbindungen B) sind Bis(mercaptoethyl)sulfid, 4-Mercaptomethyl-1,8-dimercapto-3,6-dithiaoctan, Ethylenglycol-bis(2-mercaptoacetat), Ethylenglycol-bis(3-mercaptopropionat), Trimethylolpropan-tris(2-mercaptoacetat), Trimethylolpropan-tris(3-mercaptopropionat), Tris[2-(3-mercaptopropionyloxy)ethyl]isocyanurat, Pentaerythrit-tetrakis(2-mercaptoacetat), Pentaerythrit-tetrakis(3-mercaptopropionat) und 2-Mercaptoethanol.

Zur Durchführung des erfindungsgemäßen Verfahrens werden die Di- und/oder Polyisocyanate A) mit den mercaptofunktionellen Verbindungen B) bei Temperaturen von 20 bis 200 °C, vorzugsweise 40 bis 160 °C, unter Einhaltung eines Äquivalentverhältnis von Isocyanatgruppen zu zu gegenüber Isocyanaten reaktiven Gruppen (Mercaptogruppen und gegebenenfalls Hydroxylgruppen) von 4 : 1 bis 200 : 1, vorzugsweise von 5 : 1 bis 50 : 1, besonders bevorzugt 5 : 1 bis 40 : 1, zu Thioallophanaten umgesetzt.

Gegebenenfalls in der Komponente B) zusätzlich vorliegende Hydroxylgruppen reagieren beim erfindungsgemäßen Verfahren in bekannter Weise zu Allophanatgruppen ab. Im folgenden sollen daher die Begriffe "Thiourethanisierung" und "Thioallophanatisierung" auch die gegebenenfalls parallel ablaufenden Reaktionen von Hydroxylgruppen zu Urethanen und Allophanaten mit umfassen.

Das erfindungsgemäße Verfahren kann unkatalysiert als thermisch induzierte Thioallophanatisierung durchgeführt werden. Bevorzugt kommen zur Beschleunigung der Thioallophanatisierungsreaktion aber geeignete Katalysatoren C) zum Einsatz. Hierbei handelt es sich um die üblichen aus der Polyurethanchemie bekannten Allophanatisierungskatalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Thioallophanatisierungskatalysatoren C) sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Zirconiumverbindungen, wie z. B. Zirconium-(IV)-2-ethyl-l-hexanoat, Zirconium-(IV)-neodecanoat, Zirconium-(IV)-naphthenat oder Zirconium-(IV)-acetylacetonat, Aluminium-tri(ethylaceto-acetat), Eisen-(III)-chlorid, Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren C) für das erfindungsgemäße Verfahren sind auch solche Verbindungen, die neben der Thioallophanatisierungsreaktion auch die Trimerisierung von Isocyanatgruppen unter Bildung von Isocyanuratstrukturen katalysieren. Solche Katalysatoren sind beispielsweise in der EP-A-0 649 866 Seite 4, Zeile 7 bis Seite 5, Zeile 15 beschrieben.

Bevorzugte Katalysatoren C) für das erfindungsgemäße Verfahren sind Zink- und/oder Zirconiumverbindungen der obengenannten Art. Ganz besonders bevorzugt ist die Verwendung Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und/oder Zirconium-(IV)-neodecanoat.

Katalysatoren C) kommen beim erfindungsgemäßen Verfahren, falls überhaupt, bevorzugt in einer Menge von 0,001 bis 5 Gew.-%, besonders bevorzugt 0,005 bis 1 Gew.-%, bezogen auf das Gesamtgewicht der Reaktionspartner A) und B) zum Einsatz und können sowohl vor Reaktionsbeginn als auch zu jedem Zeitpunkt der Reaktion zugesetzt werden.

Das erfindungsgemäße Verfahren wird vorzugsweise lösemittelfrei durchgeführt. Gegebenenfalls können aber auch geeignete, gegenüber den reaktiven Gruppen der Ausgangskomponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat (MPA), 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (ExxonMobil Chemical Central Europe, Köln, DE) und Shellsol® (Shell Deutschland Oil GmbH, Hamburg, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel. In einer möglichen Ausführungsform wird beim erfindungsgemäßen Verfahren das Ausgangsdiisocyanat und/oder -polyisocyanat A) bzw. eine Mischung verschiedener Ausgangsdiisocyanate und/oder - polyisocyanate gegebenenfalls unter Inertgas, wie beispielsweise Stickstoff, und gegebenenfalls in Gegenwart eines geeigneten Lösungsmittels der genannten Art bei einer Temperatur zwischen 20 und 100°C vorgelegt. Anschließend wird die mercapto- und gegebenenfalls hydroxyfunktionelle Komponente B) bzw. eine Mischung verschiedener mercapto- und gegebenenfalls hydroxyfunktioneller Komponenten in der oben angegebenen Menge zugegeben und die Reaktionstemperatur für die Thiourethanisierung gegebenenfalls durch eine geeignete Maßnahme (Heizen oder Kühlen) auf eine Temperatur von 30 bis 120°C, vorzugsweise von 50 bis 100°C eingestellt. Im Anschluss an die Thiourethanisierungsreaktion, d. h. wenn der einem vollständigen Umsatz von Isocyanat-, Mercapto- und gegebenenfalls Hydroxylgruppen theoretisch entsprechende NCO-Gehalt erreicht ist, kann die Thioallophanatisierung gegebenenfalls ohne Zusatz eines Katalysators durch Erhitzen des Reaktionsgemisches auf eine Temperatur von 120 bis 200°C gestartet werden. Vorzugsweise kommen zur Beschleunigung der Thioallophanatisierungsreaktion jedoch geeignete Katalysatoren C) der obengenannten Art zum Einsatz, wobei in Abhängigkeit von der Art und Menge des eingesetzten Katalysators Temperaturen im Bereich von 60 bis 140°C, vorzugsweise 70 bis 120°C, zur Durchführung der Reaktion ausreichend sind.

In einer anderen möglichen Ausführungsform des erfindungsgemäßen Verfahrens wird der gegebenenfalls mitzuverwendende Katalysator entweder der Diisocyanat- und/oder und/oder Polyisocyanatkomponente A) und/oder der mercaptofunktionellen Komponente B) bereits vor Beginn der eigentlichen Umsetzung zugemischt. In diesem Fall reagieren die sich intermediär bildenden Thiourethangruppen spontan weiter zur gewünschten Thioallophanatstruktur. Bei dieser Art der einstufigen Reaktionsführung werden die gegebenenfalls den Katalysator enthaltenden Isocyanatkomponente A) gegebenenfalls unter Inertgas, wie beispielsweise Stickstoff, und gegebenenfalls in Gegenwart eines geeigneten Lösungsmittels der genannten Art, in der Regel bei für die Thioallophanatisierung optimalen Temperaturen im Bereich von 60 bis 140°C, vorzugsweise 70 bis 120°C, vorgelegt und mit der gegebenenfalls den Katalysator enthaltenden mercaptofunktionellen Komponente B) zur Reaktion gebracht.

Es ist aber auch möglich, den Katalysator dem Reaktionsgemisch zu einem beliebigen Zeitpunkt während der Thiourethanisierungsreaktion zuzusetzen. Bei dieser Ausführungsform des erfindungsgemäßen Verfahrens wird für die vor der Katalysatorzugabe ablaufende reine Thiourethanisierungsreaktion in der Regel eine Temperatur im Bereich von 30 bis 120°C, vorzugsweise von 50 bis 100°C, eingestellt. Nach Zugabe eines geeigneten Katalysators wird die Thioallophantisierungreaktion schließlich bei Temperaturen von 60 bis 140°C, vorzugsweise von 70 bis 120°C, durchgeführt.

Der Verlauf der Umsetzung kann beim erfindungsgemäßen Verfahren durch z. B. titrimetrische Bestimmung des NCO-Gehaltes verfolgt werden. Nach Erreichen des angestrebten NCO-Gehaltes, vorzugsweise wenn der Umsetzungsgrad (d. h. der aus dem NCO-Gehalt errechenbare prozentuale Anteil der zu Thioallophanatgruppen und gegebenenfalls Allophanatgruppen umgesetzten, aus den Mercapto- und gegebenenfalls Hydroxylgruppen der Komponente B) sich intermediär bildenden Thiourethan- und gegebenenfalls Urethangruppen) des Reaktionsgemisches mindestens 80 %, besonders bevorzugt mindestens 90 % beträgt, ganz besonders bevorzugt nach vollständiger Thioallophanatisierung, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Thioallophanatisierungskatalysators C) der genannten Art wird die Umsetzung im allgemeinen aber durch Zugabe geeigneter Katalysatorgifte abgestoppt.

Solche Katalysatorgifte sind beispielsweise anorganische Säuren wie Salzsäure, phosphorige Säure oder Phosphorsäure, Säurechloride wie Acetylchlorid, Benzoylchlorid oder Isophthaloyldichlorid, Sulfonsäuren und Sulfonsäureester, wie Methansulfonsäure, p-Toluolsulfonsäure, Trifluormethansulfonsäure, Perfluorbutansulfonsäure, Dodecylbenzolsulfonsäure, p-Toluolsulfonsäuremethylester und -ethylester, Mono- und Dialkylphosphate wie Monotridecylphosphat, Dibutylphosphat und Dioctylphosphat aber auch silylierte Säuren, wie Methansulfonsäuretrimethylsilylester, Trifluormethansulfonsäuretrimethylsilylester, Phosphorsäure-tris-(trimethylsilylester) und Phosphorsäurediethylester-trimethylsilylester.

Die zur Abstoppung der Reaktion benötigte Menge des Katalysatorgiftes richtet sich dabei nach der Menge des verwendeten Katalysators; im allgemeinen wird eine äquivalente Menge des Abstoppers, bezogen auf den zu Beginn eingesetzten Oligomerisierungskatalysator, eingesetzt. Berücksichtigt man allerdings eventuell während der Reaktion auftretende Katalysatorverluste, so können zur Reaktionsstoppung auch schon 20 bis 80 Äquivalent-% des Katalysatorgiftes, bezogen auf die ursprünglich eingesetzte Katalysatormenge, ausreichen.

Bei Verwendung monomerer Diisocyanate als Ausgangskomponente A) wird das Reaktionsgemisch anschließend vorzugsweise durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (überschüssigen monomeren Diisocyanaten, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben den nicht umgesetzten monomeren Ausgangsdiisocyanaten, gegebenenfalls mitverwendete Lösungsmittel bei Verzicht auf den Einsatz eines Katalysatorgiftes gegebenenfalls aktiven Katalysator enthalten, können problemlos zur erneuten Oligomerisierung verwendet werden.

In einer weiteren Ausführungsform des erfindungsgemäßen Verfahrens werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Bei Verwendung der bekannten monomerarmen, aus mindestens zwei Diisocyanaten aufgebauten Polyisocyanate mit Uretdion-, Isocyanurat-, Allophanat-, Biuret-, Iminooxadiazindion- und/oder Oxadiazintrionstruktur als Ausgangskomponente A) kann in der Regel auf diesen letzten Schritt der destillativen bzw. extraktiven Reinigungschritt verzichtet werden.

Unabhängig von der Art der Aufarbeitung erhält man als Produkte des erfindungsgemäßen Verfahrens klare, praktisch farblose Thioallophanatpolyisocyanate, die in der Regel Farbzahlen von unter 120 APHA, vorzugsweise von unter 80 APHA, besonders bevorzugt von unter 60 APHA, und einen NCO-Gehalt von 5,0 bis 21,0 Gew.-%, vorzugsweise 7,0 bis 20,0 Gew.-%, besonders bevorzugt 10,0 bis 19,0 Gew.-%, aufweisen. Dabei kann die mittlere NCO-Funktionalität in Abhängigkeit von der verwendeten Thiolkomponente, der Art des Thioallophanatisierungskatalysators und des Umsatzgrades über einen breiten Bereich variieren und beträgt in der Regel von 1,8 bis 10,0, vorzugsweise von 1,8 bis 9,0, besonders bevorzugt von 2,0 bis 8,0,

Der Gehalt an Thioallophanatstrukturen (berechnet als -NH-CO-N-CO-S- ; Mol.-Gewicht = 117 g/mol) in den offenbarten Polyisocyanaten beträgt von 0,5 bis 45 Gew.-%, vorzugsweise von 1 bis 40 Gew.-% und besonders bevorzugt von 3 bis 35 Gew.-%.

Die offenbarten Thioallophanatpolyisocyanate stellen wertvolle Ausgangsmaterialien zur Herstellung von Polyurethan-, Polythiourethan- und/oder Polyharnstoff-Kunststoffen nach dem Isocyanat-Polyadditionsverfahren dar.

Sie können dabei lösemittelfrei eingesetzt werden, lassen sich bei Bedarf aber auch mit üblichen Lösemitteln, beispielsweise den obengenannten, beim erfindungsgemäßen Verfahren gegebenenfalls mitzuverwendenden inerten Lacklösemitteln, trübungsfrei verdünnen.

Die offenbarten Thioallophanatpolyisocyanate eignen sich in hervorragender Weise als Vernetzerkomponenten für Zweikomponenten-Polyurethanlacke, in denen als Polyhydroxylverbindungen die üblichen Polyetherpolyole, Polyesterpolyole Polycarbonatpolyole und/oder Polyacrylatpolyole als Reaktionspartner für die Polyisocyanate vorliegen. Besonders bevorzugte Reaktionspartner für die offenbarten Verfahrensprodukte sind Hydroxylgruppen aufweisende Polyacrylate, d. h. Polymerisate bzw. Copolymerisate von (Meth)acrylsäurealkylestern, gegebenenfalls mit Styrol oder anderen copolymerisierbaren olefinisch ungesättigten Monomeren.

Im allgemeinen besitzen die mit den offenbarten Thioallophanatpolyisocyanaten formulierten Beschichtungsmittel, denen gegebenenfalls die auf dem Lacksektor üblichen Hilfs- und Zusatzmittel, wie z. B. Verlaufshilfsmittel, Farbpigmente, Füllstoffe oder Mattierungsmittel, einverleibt werden können, schon bei Raumtemperaturtrocknung gute lacktechnische Eigenschaften. Selbstverständlich lassen sie sich jedoch auch unter forcierten Bedingungen bei erhöhter Temperatur bzw. durch Einbrennen bei Temperaturen bis 260 °C trocknen.

Zur Steuerung der Aushärtegeschwindigkeit können bei der Formulierung der Beschichtungsmittel geeignete Katalysatoren mitverwendet werden, beispielsweise die in der Isocyanatchemie üblichen Katalysatoren, wie z. B. tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Wismut(III)-2-ethylhexanoat, Wismut(III)-octoat oder Molybdänglykolat.

Selbstverständlich können die offenbarten Polyisocyanate mit Thioallophanatstruktur auch in mit aus der Polyurethanchemie an sich bekannten Blockierungsmitteln blockierter Form in Kombination mit den obengenannten Lackbindemitteln oder Lackbindemittelkomponenten im Sinne von Einkomponenten-PUR-Einbrennsystemen eingesetzt werden. Geeignete Blockierungsmittel sind beispielsweise Malonsäurediethylester, Acetessigester, aktivierte cyclische Ketone, wie z. B. Cyclopentanon-2-carboxymethylester und -carboxyethylester, Acetonoxim, Butanonoxim, □ - Caprolactam, 3,5-Dimethylpyrazol, 1,2,4-Triazol, Dimethyl-1,2,4-triazol, Imidazol, Benzyl-tert.-butylamin oder beliebige Gemische dieser Blockierungsmittel.

Die offenbarten Verfahrensprodukte können auch mit Polyaminen, wie z. B. den aus EP-B 0 403 921 bekannten Polyasparaginsäurederivaten, oder auch solchen Polyaminen, deren Aminogruppen in blockierter Form vorliegen, wie z. B. Polyketiminen, Polyaldiminen oder Oxazolanen, kombiniert werden. Aus diesen blockierten Aminogruppen entstehen unter Feuchtigkeitseinfluß freie Aminogruppen und im Falle der Oxazolane auch freie Hydroxylgruppen, die unter Vernetzung mit den Thioallophanatpolyisocyanaten abreagieren.

Zur Herstellung von Beschichtungen oder Formkörpern besonders hoher Lichtbrechung können die offenbarten Thioallophanatpolyisocyanate auch mit beliebigen Polythiolen, insbesondere Polythioether- und Polyesterthiolen, wie z. B. 4-Mercaptomethyl-1,8-dimercapto-3,6-dithiaoctan, 2,5-Bismercaptomethyl-1,4-dithian, 1,1,3,3-Tetrakis(mercaptomethylthio)propan, 5,7-Dimercaptomethyl-1,11 -dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-trithiaundecan, Trimethylolpropan-tris(3-mercaptopropionat), Trimethylolethan-tris(2-mercaptoacetat), Pentaerythrit-tetrakis(2-mercaptoacetat) und Pentaerythrit-tetrakis(3-mercaptopropionat), zu Polythiourethanen umgesetzt werden.

Die offenbarten Thioallophanatpolyisocyanate eignen sich auch als Vernetzerkomponenten für in Wasser gelöst oder dispergiert vorliegende Bindemittel oder Bindemittelkomponenten mit gegenüber Isocyanatgruppen reaktionsfähigen Gruppen, insbesondere alkoholischen Hydroxylgruppen, bei der Herstellung wäßriger Zweikomponenten-Polyurethansysteme. Sie können dabei entweder als solche, d. h. in hydrophober Form, oder aber auch in nach bekannten Verfahren, z. B. gemäß EP-B 0 540 985, EP-B 0 959 087 oder EP-B 1 287 052, hydrophil modifizierter Form eingesetzt werden.

In allen vorstehend beschriebenen Verwendungen der offenbarten Thioallophanatpolyisocyanate können diese sowohl alleine als auch in Abmischung mit beliebigen weiteren Polyisocyanaten mit aliphatisch, cycloaliphatisch, araliphatisch und/oder aromatisch gebundenen Isocyanatgruppen, insbesondere den bekannten Lackpolyisocyanaten mit Uretdion-, Isocyanurat-, Iminooxadiazindion-, Urethan-, Allophanat-, Biuret- und/oder Oxadiazintrionstruktur, wie sie beispielhaft in Laas et al., J. Prakt. Chem. 336, 1994, 185-200*,* der DE-A 1 670 666, DE-A 3 700 209, DE-A 3 900 053, EP-A 0 330 966, EP-A 0 336 205, EP-A 0 339 396 und EP-A 0 798 299 beschrieben sind, als Isocyanatkomponente zum Einsatz kommen.

In Zweikomponenten Polyurethan- und/oder Polyharnstofflacken und -beschichtungen, die als Vernetzerkomponenten oder Bestandteil von Vernetzerkomponenten für Polyole und/oder Polyamine die offenbarten Thioallophanatpolyisocyanate enthalten, liegen die Reaktionspartner üblicherweise in solchen Mengen vor, dass auf jede gegebenenfalls blockierte Isocyanatgruppe 0,5 bis 3, vorzugsweise 0,6 bis 2,0, besonders bevorzugt 0,8 bis 1,6 gegebenenfalls blockierte, gegenüber Isocyanaten reaktive Gruppen entfallen.

Als Untergründe für die mit Hilfe der offenbarten Thioallophanatpolyisocyanate formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Weitere Gegenstände dieser Erfindung sind somit Beschichtungsmittel enthaltend Polyisocyanate mit aliphatisch, cycloaliphatisch, araliphatisch und/oder aromatisch gebundenen Isocyanatgruppen, enthaltend Thioallophanatstrukturen der Formel (I) 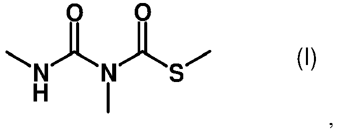 sowie die mit diesen Beschichtungsmitteln beschichteten Substrate. Bevorzugt beträgt der Gehalt an Thioallophanatstrukturen der Formel (I) beim erfindungsgemäßen Verfahren, der erfindungsgemäßen Verwendung und in den erfindungsgemäßen Beschichtungsmitteln von 0,5 bis 45 Gew.-%.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

Die Rest-Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219.

Die Gehalte (mol-%) der unter den erfindungsgemäßen Verfahrensbedingungen entstehenden Isocyanatfolgeprodukte Thiourethan, Thioallophanat, Urethan, Allophanat und Isocyanurat wurden aus den Integralen protokonenentkoppelter ¹³C-NMR-Spektren (aufgenommen an einem Gerät Bruker DPX-400) errechnet und beziehen sich, soweit nichts Anderslautendes vermerkt, jeweils auf die Summe an vorliegenden Thiourethan-, Thioallophanat- und Isocyanuratgruppen. Die einzelnen Strukturelemente weisen folgende chemische Verschiebungen (in ppm) auf: Thiourethan: 166.8; Thioallophanat: 172.3 und 152.8; Urethan: 156.3; Allophanat: 155.7 und 153.8; Isocyanurat: 148.4.

Die für die offenbarten Verfahrensprodukte angegebenen mittleren Isocyanatfunktionalitäten sind rechnerische Werte, die aus den Funktionalitäten der idealen Grundstrukturen abgeleitet wurden.

Die Gehalte (Gew.-%) an Thioallophanatstrukturen wurden als -NH-CO-N-CO-S- mit dem Mol.-Gewicht = 117 g/mol berechnet.

### Beispiel 1 (erfindungsgemäß)

1680 g (10 mol) Hexamethylendiisocyanat (HDI) wurden bei einer Temperatur von 80°C unter trockenem Stickstoff und Rühren vorgelegt und mit 0,1 g Zink-(II)-2-ethyl-1-hexanoat als Katalysator versetzt. Über einen Zeitraum von ca. 30 min wurden 119 g (0,5 mol) Ethylenglycol-bis(3-mercaptopropionat) zugetropft, wobei die Temperatur der Mischung aufgrund der exotherm einsetzenden Reaktion bis auf 85°C anstieg. Das Reaktionsgemisch wurde weiter bei 85°C gerührt bis der NCO-Gehalt nach ca. 3 h auf 42,0 % abgesunken war. Der Katalysator wurde durch Zugabe von 0,1 g ortho-Phosphorsäure deaktiviert und das nicht umgesetzte monomere HDI bei einer Temperatur von 130°C und einem Druck von 0,1 mbar im Dünnschichtverdampfer abgetrennt. Man erhielt 434 g eines praktisch farblosen klaren Polyisocyanatgemisches, das folgende Kenndaten und Zusammensetzung aufwies:

| | |
|---|---|
| NCO-Gehalt: | 17,1 % |
| monomeres HDI: | 0,18 % |
| Viskosität (23°C): | 9.040 mPas |
| mittlere NCO-Funktionalität: | > 4 |
| Thiourethan: | 0,0 mol-% |
| Thioallophanat: | 98,4 mol-% |
| Isocyanuratgruppen: | 1,6 mol-% |
| Gehalt an Thioallophanatstrukturen: | 26,9 % |

### Beispiel 2 (erfindungsgemäß)

Nach dem in Beispiel 1 beschriebenen Verfahren wurden 3360 g (20 mol) HDI in Gegenwart von 0,3 g Zink-(II)-2-ethyl-1-hexanoat mit 133 g (0,33 mol) Trimethylolpropan-tris(3-mercaptopropionat) bei einer Temperatur von 85°C bis zu einem NCO-Gehalt von 45,7 % umgesetzt. Nach Abstoppen der Reaktion mit 0,3 g ortho-Phosphorsäure und destillativer Aufarbeitung im Dünnschichtverdampfer erhielt man 467 g eines praktisch farblosen klaren Polyisocyanatgemisches, das folgende Kenndaten und Zusammensetzung aufwies:

| | |
|---|---|
| NCO-Gehalt: | 17,6 % |
| monomeres HDI: | 0,42 % |
| Viskosität (23°C): | 20.200 mPas |
| mittlere NCO-Funktionalität: | >6 |
| Thiourethan: | 0,0 mol-% |
| Thioallophanat: | 95,2 mol-% |
| Isocyanuratgruppen: | 4,8 mol-% |
| Gehalt an Thioallophanatstrukturen: | 25,2 % |

### Beispiel 3 (erfindungsgemäß)

Nach dem in Beispiel 1 beschriebenen Verfahren wurden 1008 g (6 mol) HDI in Gegenwart von 0,1 g Zink-(II)-2-ethyl-1-hexanoat mit 202 g (1,0 mol) Dodecanthiol bei einer Temperatur von 85°C bis zu einem NCO-Gehalt von 34,7 % umgesetzt. Nach Abstoppen der Reaktion mit 0,1 g ortho-Phosphorsäure und destillativer Aufarbeitung im Dünnschichtverdampfer erhielt man 478 g eines praktisch farblosen klaren Polyisocyanatgemisches, das folgende Kenndaten und Zusammensetzung aufwies:

| | |
|---|---|
| NCO-Gehalt: | 13,5 % |
| monomeres HDI: | 0,03 % |
| Viskosität (23°C): | 218 mPas |
| mittlere NCO-Funktionalität: | 2 |
| Thiourethan: | 8,0 mol-% |
| Thioallophanat: | 91,1 mol-% |
| Isocyanuratgruppen: | 0,9 mol-% |
| Gehalt an Thioallophanatstrukturen: | 22,3 % |

### Beispiel 4 (erfindungsgemäß)

940 g (1,6 mol) eines Polyisocyanuratpolyisocyanates auf Basis von HDI mit einem NCO-Gehalt von 22,8 %, einer mittleren NCO-Funktionalität von 3,2, einem Gehalt an monomerem HDI von 0,07 % und einer Viskosität von 1210 mPas wurden bei einer Temperatur von 80°C unter trockenem Stickstoff und Rühren vorgelegt und mit 0,1 g Zink-(II)-2-ethyl-1-hexanoat als Katalysator versetzt. Über einen Zeitraum von ca. 10 min wurden 60 g (0,3 mol) Dodecanthiol zugetropft, wobei die Temperatur der Mischung aufgrund der exotherm einsetzenden Reaktion bis auf 93°C anstieg. Das Reaktionsgemisch wurde weiter bei 90°C gerührt bis der NCO-Gehalt nach ca. 5 h auf 18,9 % abgesunken war. Anschließend wurde der Katalysator durch Zugabe von 0,1 g ortho-Phosphorsäure deaktiviert. Es lag ein schwach gelblich gefärbtes klares Polyisocyanatgemisch vor, das folgende Kenndaten und Zusammensetzung aufwies:

| | |
|---|---|
| NCO-Gehalt: | 18,9 % |
| monomeres HDI: | 0,06 % |
| Viskosität (23°C): | 5480 mPas |
| mittlere NCO-Funktionalität: | 3,5 |
| Thiourethan: | 15,3 mol-% |
| Thioallophanat: | 84,7 mol-% |
| Gehalt an Thioallophanatstrukturen: | 3,5 % |

Die angegebenen molaren Anteile an Isocyanatfolgeprodukten beziehen sich in diesem Beispiel jeweils nur auf die Summe aus Thiourethan- und Thioallophanatgruppen, da die bereits im Ausgangspolyisocyanat ursprünglich vorhandenen Isocyanuratstrukturen eine sichere Quantifizierung der sich unter den Reaktionsbedingungen als Nebenkomponente neu bildenden Isocyanuratgruppen nicht erlaubt.

### Beispiel 5 (erfindungsgemäß)

1680 g (10 mol) HDI wurden bei einer Temperatur von 80°C unter trockenem Stickstoff und Rühren vorgelegt und mit 0,1 g Zink-(II)-2-ethyl-1-hexanoat als Katalysator versetzt. Über einen Zeitraum von ca. 30 min wurden 124 g (1,0 mol) p-Thiokresol portionsweise so zugegeben, dass die Temperatur der Mischung aufgrund der exotherm einsetzenden Reaktion 85°C nicht überstieg. Das Reaktionsgemisch wurde anschließend weiter bei 85°C gerührt bis der NCO-Gehalt nach ca. 5 h auf 41,9 % abgesunken war. Der Katalysator wurde durch Zugabe von 0,1 g ortho-Phosphorsäure deaktiviert und das nicht umgesetzte monomere HDI bei einer Temperatur von 130°C und einem Druck von 0,1 mbar im Dünnschichtverdampfer abgetrennt. Man erhielt 402 g eines schwach gelb gefärbten klaren Polyisocyanatgemisches, das folgende Kenndaten und Zusammensetzung aufwies:

| | |
|---|---|
| NCO-Gehalt: | 15,5 % |
| monomeres HDI: | 0,13 % |
| Viskosität (23°C): | 3.280 mPas |
| mittlere NCO-Funktionalität: | 2 |
| Thiourethan: | 10,0 mol-% |
| Thioallophanat: | 89,3 mol-% |
| Isocyanuratgruppen: | 0,7 mol-% |
| Gehalt an Thioallophanatstrukturen: | 26,2 % |

### Beispiel 6 (erfindungsgemäß)

840 g (5 mol) HDI wurden bei einer Temperatur von 100°C unter trockenem Stickstoff und Rühren vorgelegt und mit 0,14 g Zink-(II)-2-ethyl-1-hexanoat als Katalysator versetzt. Über einen Zeitraum von ca. 30 min wurden 119 g (0,5 mol) Ethylenglycol-bis(3-mercaptopropionat) zugetropft, wobei die Temperatur der Mischung aufgrund der exotherm einsetzenden Reaktion bis auf 110°C anstieg. Das Reaktionsgemisch wurde weiter bei 110°C gerührt bis der NCO-Gehalt nach ca. 8 h auf 34,6 % abgesunken war. Der Katalysator wurde durch Zugabe von 0,5 g Benzoylchlorid deaktiviert und das nicht umgesetzte monomere HDI bei einer Temperatur von 110°C und einem Druck von 0,1 mbar im Dünnschichtverdampfer abgetrennt. Man erhielt 413 g eines praktisch farblosen klaren Polyisocyanatgemisch, das folgende Kenndaten und Zusammensetzung aufwies:

| | |
|---|---|
| NCO-Gehalt: | 15,1 % |
| monomeres HDI: | 0,03 % |
| Viskosität (23°C): | 24.400 mPas |
| mittlere NCO-Funktionalität: | > 4 |
| Thiourethan: | 3,1 mol-% |
| Thioallophanat: | 96,1 mol-% |
| Isocyanuratgruppen: | 0,8 mol-% |
| Gehalt an Thioallophanatstrukturen: | 27,2 % |

**Beispiel 7** (erfindungsgemäß) Nach dem in Beispiel 6 beschriebenen Verfahren wurden 840 g (5 mol) HDI in Gegenwart von 0,05 g Zink-(II)-2-ethyl-1-hexanoat mit 87 g (0,33 mol) 2,3-Di((2-mercaptoethyl)thio)-1-propanthiol bei einer Temperatur von 80°C bis zu einem NCO-Gehalt von 35,8 % umgesetzt. Nach Abstoppen der Reaktion mit 0,5 g Benzoylchlorid und destillativer Aufarbeitung im Dünnschichtverdampfer erhielt man 382 g eines praktisch farblosen klaren Polyisocyanatgemisch, das folgende Kenndaten und Zusammensetzung aufwies:

| | |
|---|---|
| NCO-Gehalt: | 16,5 % |
| monomeres HDI: | 0,05 % |
| Viskosität (23°C): | 360.000 mPas |
| mittlere NCO-Funktionalität: | > 6 |
| Thiourethan: | 0,0 mol-% |
| Thioallophanat: | 98,6 mol-% |
| Isocyanuratgruppen: | 1,4 mol-% |
| Gehalt an Thioallophanatstrukturen: | 30,2 % |

### Beispiel 8 (erfindungsgemäß)

840 g (5 mol) HDI wurden bei einer Temperatur von 80°C unter trockenem Stickstoff und Rühren vorgelegt. Über einen Zeitraum von ca. 60 min wurden 77 g (0,5 mol) Bis(2-mercaptoethyl)sulfid zugetropft. Das Reaktionsgemisch wurde weiter bei 140°C gerührt bis der NCO-Gehalt nach ca. 6 h auf 34,6 % abgesunken war. Das nicht umgesetzte monomere HDI wurde bei einer Temperatur von 110°C und einem Druck von 0,1 mbar im Dünnschichtverdampfer abgetrennt. Man erhielt 392 g eines praktisch farblosen klaren Polyisocyanatgemisch, das folgende Kenndaten und Zusammensetzung aufwies:

| | |
|---|---|
| NCO-Gehalt: | 17,7 % |
| monomeres HDI: | 0,11 % |
| Viskosität (23°C): | 8200 mPas |
| mittlere NCO-Funktionalität: | > 4 |
| Thiourethan: | 13,4 mol-% |
| Thioallophanat: | 86,6 mol-% |
| Isocyanuratgruppen: | 0,0 mol-% |
| Gehalt an Thioallophanatstrukturen: | 25,8 % |

### Beispiel 9 (erfindungsgemäß)

Nach dem in Beispiel 6 beschriebenen Verfahren wurden 840 g (5 mol) HDI in Gegenwart von 0,05 g Zink-(II)-2-ethyl-1-hexanoat mit 91 g (0,5 mol) 3,6-Dioxa-1,8-octandithiol bei einer Temperatur von 80°C bis zu einem NCO-Gehalt von 36,5 % umgesetzt. Nach Abstoppen der Reaktion mit 0,5 g Benzoylchlorid und destillativer Aufarbeitung im Dünnschichtverdampfer erhielt man 399 g eines praktisch farblosen klaren Polyisocyanatgemisch, das folgende Kenndaten und Zusammensetzung aufwies:

| | |
|---|---|
| NCO-Gehalt: | 16,6 % |
| monomeres HDI: | 0,03 % |
| Viskosität (23°C): | 7750 mPas |
| mittlere NCO-Funktionalität: | > 4 |
| Thiourethan: | 8,0 mol-% |
| Thioallophanat: | 92,0 mol-% |
| Isocyanuratgruppen: | 0,0 mol-% |
| Gehalt an Thioallophanatstrukturen: | 27,0 % |

### Beispiel 10 (erfindungsgemäß)

Nach dem in Beispiel 6 beschriebenen Verfahren wurden 840 g (5 mol) HDI in Gegenwart von 0,1 g Zink-(II)-2-ethyl-1-hexanoat mit 41,5 g (0,5 mol) 2,3-Dimercapto-1-propanol bei einer Temperatur von 110°C bis zu einem NCO-Gehalt von 38,1 % umgesetzt. Nach Abstoppen der Reaktion mit 0,5 g Benzoylchlorid und destillativer Aufarbeitung im Dünnschichtverdampfer erhielt man 354 g eines praktisch farblosen klaren Polyisocyanatgemisch, das folgende Kenndaten und Zusammensetzung aufwies:

| | |
|---|---|
| NCO-Gehalt: | 18,9 % |
| monomeres HDI: | 0,08 % |
| Viskosität (23°C): | 120000 mPas |
| mittlere NCO-Funktionalität: | > 6 |
| Thiourethan: | 2,0 mol-% |
| Urethan: | 5,3 mol-% |
| Thioallophanat: | 61,0 mol-% |
| Allophanat | 30,7 mol-% |
| Isocyanuratgruppen: | 1,0 mol-% |
| Gehalt an Thioallophanatstrukturen: | 20,2 % |

### Beispiel 11 (erfindungsgemäß)

Nach dem in Beispiel 6 beschriebenen Verfahren wurden 1680 g (10 mol) HDI in Gegenwart von 0,05 g Zink-(II)-2-ethyl-1-hexanoat mit 87 g (0,33 mol) 2,3-Di((2-mercaptoethyl)thio)-1-propanthiol bei einer Temperatur von 80°C bis zu einem NCO-Gehalt von 41,3 % umgesetzt. Nach Abstoppen der Reaktion mit 0,5 g Benzoylchlorid und destillativer Aufarbeitung im Dünnschichtverdampfer erhielt man 366 g eines praktisch farblosen klaren Polyisocyanatgemisch, das folgende Kenndaten und Zusammensetzung aufwies:

| | |
|---|---|
| NCO-Gehalt: | 17,9 % |
| monomeres HDI: | 0,07% |
| Viskosität (23°C): | 40.000 mPas |
| mittlere NCO-Funktionalität: | > 6 |
| Thiourethan: | 13,1 mol-% |
| Thioallophanat: | 86,4 mol-% |
| Isocyanuratgruppen: | 0,5 mol-% |
| Gehalt an Thioallophanatstrukturen: | 27,6% |

### Beispiel 12 (erfindungsgemäß)

1100 g (5 mol) Isophorondiisocyanat (IPDI) wurden bei einer Temperatur von 90°C unter trockenem Stickstoff und Rühren vorgelegt und mit 0,1 g Zink-(II)-2-ethyl-1-hexanoat als Katalysator versetzt. Über einen Zeitraum von ca. 15 min wurden 119 g (0,5 mol) Ethylenglycol-bis(3-mercaptopropionat) zugetropft, wobei die Temperatur der Mischung aufgrund der exotherm einsetzenden Reaktion bis auf 103°C anstieg. Das Reaktionsgemisch wurde weiter bei 105°C gerührt bis der NCO-Gehalt nach ca. 8 h auf 32,0 % abgesunken war. Der Katalysator wurde durch Zugabe von 0,1 g ortho-Phosphorsäure deaktiviert und das nicht umgesetzte monomere IPDI bei einer Temperatur von 160°C und einem Druck von 0,2 mbar im Dünnschichtverdampfer abgetrennt. Man erhielt 428 g eines hochviskosen schwach gelb gefärbten Polyisocyanatgemisches, das folgende Kenndaten und Zusammensetzung aufwies:

| | | |
|---|---|---|
| NCO-Gehalt: | 16,9 % | |
| monomeres IPDI: | 0,23 % | |
| Viskosität (23°C): | 9.100 mPas | (als 80 %ige Lösung in MPA) |
| mittlere NCO-Funktionalität: | > 4 | |
| Thiourethan: | 35,0 mol-% | |
| Thioallophanat: | 65,0 mol-% | |
| Isocyanuratgruppen: | 0,0 mol-% | |
| Gehalt an Thioallophanatstrukturen: | 17,8 % | |

### Beispiel 13 (erfindungsgemäß, Herstellung einer Beschichtung)

37 g (0,156 val) des Thioallophanatpolyisocyanates aus Beispiel 7 wurden mit 90 g (0,156 val) eines hydroxyfunktionellen Polyacrylatharzes einer OH-Zahl von 97 mg KOH/g (Desmophen® A 870, Fa. Nuplex Resins GmbH) und 73 g Butylacetat mit Hilfe eines Magnetrührers homogenisiert. Die Mischung wurde mit 0,1 g Dibutylzinndilaurat als Aushärtekatalysator versetzt und weitere 5 min gerührt. Anschließend wurde die Mischung mittels eines Kastenrakels in einer Nassschichtdicke von 120 µm auf eine Glasplatte appliziert und 30 Minuten bei 140°C ausgehärtet. Man erhielt einen klaren, glänzenden Lackfilm, der eine Pendelhärte nach König von 200 Sekunden (gemessen nach 24 Stunden bei 23°C mit einem Pendelhärtemessgerät Modell PH-5458, Fa. Byk) aufwies und sich gegenüber Aceton (einminütiger Kontakt zu Aceton-getränktem Wattebausch) als völlig beständig zeigte.

## Patentansprüche

1. Verfahren zur Herstellung von Polyisocyanaten mit aliphatisch, cycloaliphatisch, araliphatisch und/oder aromatisch gebundenen Isocyanatgruppen, enthaltend Thioallophanatstrukturen der Formel (I) 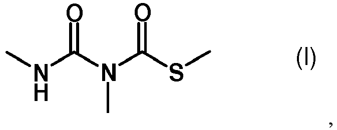 durch Umsetzung von
A) mindestens einem Di- und/oder Polyisocyanat mit aliphatisch, cycloaliphatisch, araliphatisch und/oder aromatisch gebundenen Isocyanatgruppen mit
B) mindestens einer mindestens eine Mercaptogruppe tragenden Verbindung, gegebenenfalls in Gegenwart
C) eines die Bildung von Thioallophanatgruppen beschleunigenden Katalysators
unter Einhaltung eines Äquivalentverhältnisses von Isocyanatgruppen zu gegenüber Isocyanaten reaktiven Gruppen von 4 : 1 bis 200 : 1.

2. Verfahren gemäß Anspruch 1, **dadurch gekennzeichnet, daß** der Gehalt an Thioallophanatstrukturen der Formel (I) von 0,5 bis 45 Gew.-% beträgt

3. Verfahren gemäß Anspruch 1 oder 2, **dadurch gekennzeichnet, dass** als Komponente A) Diisocyanate mit aliphatisch und/oder cycloaliphatisch gebundenen Isocyanatgruppen zum Einsatz kommen.

4. Verfahren gemäß Anspruch 1 oder 2, **dadurch gekennzeichnet, dass** als Komponente A) 1,5-Diisocyanatopentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate zum Einsatz kommen.

5. Verfahren gemäß einem der Ansprüche 1 bis 4, **dadurch gekennzeichnet, dass** als Komponente B) Monothiole und/oder Polythiole, die gegebenenfalls zusätzlich mindestens eine Hydroxylgruppe tragen, aromatische Thioverbindungen, Polythioetherthiole und/oder Polyesterthiole zum Einsatz kommen.

6. Verfahren gemäß Anspruch 5, **dadurch gekennzeichnet, dass** als Komponente B) Monothiole und/oder Polythiole, die zusätzlich mindestens eine Hydroxylgruppe tragen, Polythioetherthiole und/oder Polyesterthiole zum Einsatz kommen.

7. Verfahren gemäß Anspruch 6, **dadurch gekennzeichnet, dass** als Komponente B) Bis(mercaptoethyl)sulfid, 4-Mercaptomethyl-1,8-dimercapto-3,6-dithiaoctan, Ethylenglycolbis(2-mercaptoacetat), Ethylenglyco1-bis(3-mercaptopropionat), Trimethylolpropan-tris(2-mercaptoacetat), Trimethylolpropan-tris(3-mercaptopropionat), Tris[2-(3-mercaptopropionyloxy)ethyl]isocyanurat, Pentaerythrit-tetrakis(2-mercaptoacetat), Pentaerythrit-tetrakis(3-mercaptopropionat) und/oder 2-Mercaptoethanol zum Einsatz kommen.

8. Verfahren gemäß einem der Ansprüche 1 bis 7, **dadurch gekennzeichnet, daß** man die Umsetzung in Gegenwart eines die Bildung von Thioallophanatgruppen beschleunigenden Katalysators, bevorzugt in Gegenwart von Zink- und/oder Zirconiumcarboxylaten, durchführt.

9. Verfahren gemäß Anspruch 8, **dadurch gekennzeichnet, daß** man als Thioallophanatisierungskatalysator Zink-(II)-n-octanoat, Zink-(II)-2-ethyl-1-hexanoat, Zink-(II)-stearat, Zirconium-(IV)-n-octanoat, Zirconium-(IV)-2 ethyl-l-hexanoat und/oder Zirconium-(IV)-neodecanoat einsetzt.

10. Verfahren gemäß einem der Ansprüche 1 bis 9, **dadurch gekennzeichnet, daß** man im Anschluß an die Umsetzung überschüssige, nicht umgesetzte monomere Diisocyanate A) durch Dünnschichtdestillation von den Thioallophanatpolyisocyanaten abtrennt.

11. Verwendung von Polyisocyanaten mit aliphatisch, cycloaliphatisch, araliphatisch und/oder aromatisch gebundenen Isocyanatgruppen, enthaltend Thioallophanatstrukturen der Formel (I) 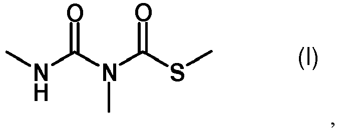 als Ausgangskomponenten bei der Herstellung von Beschichtungen.

12. Verwendung gemäß Anspruch 11, **dadurch gekennzeichnet, daß** der Gehalt an Thioallophanatstrukturen der Formel (I) von 0,5 bis 45 Gew.-% beträgt.

13. Beschichtungsmittel enthaltend Polyisocyanate mit aliphatisch, cycloaliphatisch, araliphatisch und/oder aromatisch gebundenen Isocyanatgruppen, enthaltend Thioallophanatstrukturen der Formel (I)

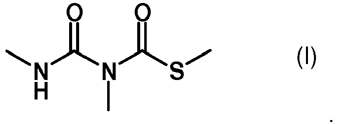

14. Beschichtungsmittel gemäß Anspruch 13, **dadurch gekennzeichnet, daß** der Gehalt an Thioallophanatstrukturen der Formel (I) von 0,5 bis 45 Gew.-% beträgt.

15. Mit Beschichtungsmitteln gemäß Anspruch 13 oder 14 beschichtete Substrate.

## Claims

1. Process for preparing polyisocyanates having aliphatically, cycloaliphatically, araliphatically and/or aromatically bonded isocyanate groups, comprising thioallophanate structures of the formula (I) 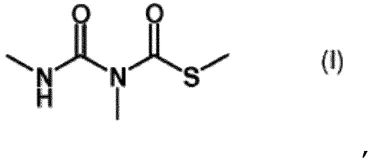 by reacting
A) at least one di- and/or polyisocyanate having aliphatically, cycloaliphatically, araliphatically and/or aromatically bonded isocyanate groups with
B) at least one compound carrying at least one mercapto group, optionally in the presence of
C) a catalyst which accelerates the formation of thioallophanate groups,
while observing an equivalence ratio of isocyanate groups to isocyanate-reactive groups of 4:1 to 200:1.

2. Process according to Claim 1, **characterized in that** the amount of thioallophanate structures of the formula (I) is from 0.5 to 45 wt%.

3. Process according to Claim 1 or 2, **characterized in that** diisocyanates having aliphatically and/or cycloaliphatically bonded isocyanate groups are employed as component A).

4. Process according to Claim 1 or 2, **characterized in that** 1,5-diisocyanatopentane, 1,6-diisocyanatohexane, 1-isocyanato-3,3,5-trimethyl-5-isocyanatomethylcyclohexane, 2,4'- and/or 4,4'-diisocyanatodicyclohexylmethane or any desired mixtures of these diisocyanates are employed as component A).

5. Process according to any of Claims 1 to 4, **characterized in that** monothiols and/or polythiols which optionally additionally carry at least one hydroxyl group, aromatic thio compounds, polythioletherthiols and/or polyesterthiols are employed as component B).

6. Process according to Claim 5, **characterized in that** monothiols and/or polythiols which additionally carry at least one hydroxyl group, polythioletherthiols and/or polyesterthiols are employed as component B).

7. Process according to Claim 6, **characterized in that** bis(mercaptoethyl) sulphide, 4-mercaptomethyl-1,8-dimercapto-3,6-dithiaoctane, ethylene glycol bis(2-mercaptoacetate), ethylene glycol bis(3-mercaptopropionate), trimethylolpropane tris(2-mercaptoacetate) trimethylolpropane tris(3-mercaptopropionate), tris[2-(3-mercaptopropionyloxy)ethyl]isocyanurate, pentaerythritol tetrakis(2-mercaptoacetate), pentaerythritol tetrakis(3-mercaptopropionate) and/or 2-mercaptoethanol are employed as component B) .

8. Process according to any of Claims 1 to 7, **characterized in that** the reaction is carried out in the presence of a catalyst which accelerates the formation of thioallophanate groups, preferably in the presence of zinc carboxylates and/or zirconium carboxylates.

9. Process according to Claim 8, **characterized in that** zinc(II) n-octanoate, zinc(II) 2-ethyl-1-hexanoate, zinc(II) stearate, zirconium(IV) n-octanoate, zirconium(IV) 2-ethyl-1-hexanoate and/or zirconnium(IV) neodecanoate are used as thioallophanatization catalyst.

10. Process according to any of Claims 1 to 9, **characterized in that** subsequent to the reaction, excess, unreactive monomer diisocyanates A) are removed by thin-film distillation from the thioallophanate polyisocyanates.

11. Use of polyisocyanates having aliphatically, cycloaliphatically, araliphatically and/or aromatically bonded isocyanate groups, comprising thioallophanate structures of the formula (I) 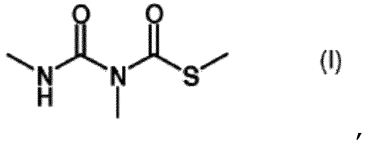 as starting components in the preparation of coatings.

12. Use according to Claim 11, **characterized in that** the amount of thioallophanate structures of the formula (I) is from 0.5 to 45 wt%.

13. Coating compositions comprising polyisocyanates having aliphatically, cycloaliphatically, araliphatically and/or aromatically bonded isocyanate groups, comprising thioallophanate structures of the formula (I)

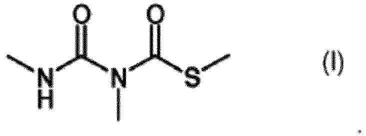

14. Coating compositions according to Claim 13, **characterized in that** the amount of thioallophanate structures of the formula (I) is from 0.5 to 45 wt%.

15. Substrates coated with coating compositions according to Claim 13 or 14.

## Revendications

1. Procédé pour la préparation de polyisocyanates comportant des groupes isocyanate liés de manière aliphatique, cycloaliphatique, araliphatique et/ou aromatique, contenant des structures de type thioallophanate de formule (I) 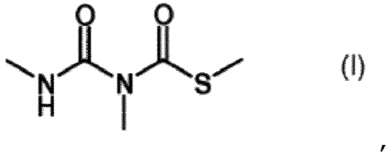 par transformation de
A) au moins un diisocyanate et/ou polyisocyanate comportant des groupes isocyanate liés de manière aliphatique, cycloaliphatique, araliphatique et/ou aromatique avec
B) au moins un composé portant au moins un groupe mercapto, éventuellement en présence
C) d'un catalyseur accélérant la formation de groupes thioallophanate
en respectant un rapport d'équivalents de groupes isocyanate sur groupes réactifs envers isocyanate de 4:1 à 200:1.

2. Procédé selon la revendication 1, **caractérisé en ce que** la teneur en structures de type thioallophanate de formule (I) est de 0,5 à 45 % en poids.

3. Procédé selon la revendication 1 ou 2, **caractérisé en ce que** des diisocyanates comportant des groupes isocyanate liés de manière aliphatique et/ou cycloaliphatique sont utilisés en tant que composant A).

4. Procédé selon la revendication 1 ou 2, **caractérisé en ce que** le 1,5-diisocyanatopentane, le 1,6-diisocyanatohexane, le 1-isocyanato-3,3,5-triméthyl-5-isocyanatométhyl-cyclohexane, le 2,4'-diisocyanatodicyclohexylméthane et/ou le 4,4'-diisocyanatodicyclohexylméthane ou des mélanges quelconques de ces diisocyanates sont utilisés en tant que composant A).

5. Procédé selon l'une quelconque des revendications 1 à 4, **caractérisé en ce que** des monothiols et/ou des polythiols, qui éventuellement portent de plus au moins un groupe hydroxyle, des composés thio aromatiques, des polythioétherthiols et/ou des polyesterthiols sont utilisés en tant que composant B).

6. Procédé selon la revendication 5, **caractérisé en ce que** des monothiols et/ou des polythiols, qui portent de plus au moins un groupe hydroxyle, des polythioétherthiols et/ou des polyesterthiols sont utilisés en tant que composant B).

7. Procédé selon la revendication 6 **caractérisé en ce que** le bis(mercaptoéthyl)sulfure, le 4-mercaptométhyl-1,8-dimercapto-3,6-dithiaoctane, le bis (2-mercaptoacétate) d'éthylèneglycol, le bis(3-mercaptopropionate) d'éthylèneglycol, le tris(2-mercaptoacétate) de triméthylolpropane, le tris(3-mercaptopropionate) de triméthylolpropane, le tris[2-(3-mercaptopropionyloxy)éthyl]isocyanurate, le tétrakis(2-mercaptoacétate) de pentaérythritol, le tétrakis(3-mercaptopropionate) de pentaérythritol et/ou le 2-mercaptoéthanol sont utilisés en tant que composant B).

8. Procédé selon l'une quelconque des revendications 1 à 7, **caractérisé en ce que** l'on met en œuvre la transformation en présence d'un catalyseur accélérant la formation de groupes thioallophanate, préférablement en présence de carboxylates de zinc et/ou de carboxylates de zirconium.

9. Procédé selon la revendication 8, **caractérisé en ce qu'**on utilise du n-octanoate de zinc(II), du 2-éthyl-1-hexanoate de zinc(II), du stéarate de zinc(II), du n-octanoate de zirconium(IV), du 2-éthyl-1-hexanoate de zirconium(IV) et/ou du néodécanoate de zirconium(IV) en tant que catalyseur de formation de thioallophanate.

10. Procédé selon l'une quelconque des revendications 1 à 9, **caractérisé en ce qu'**à l'issue de la transformation, on sépare par distillation sur film mince les diisocyanates A) monomériques en excès, n'ayant pas réagi, des thioallophanatepolyisocyanates.

11. Utilisation de polyisocyanates comportant des groupes isocyanate liés de manière aliphatique, cycloaliphatique, araliphatique et/ou aromatique, contenant des structures de type thioallophanate de formule (I) 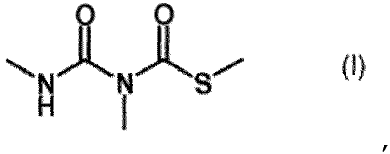 en tant que composants de départ dans la préparation de revêtements.

12. Utilisation selon la revendication 11, **caractérisée en ce que** la teneur en structures de type thioallophanate de formule (I) est de 0,5 à 45 % en poids.

13. Agent de revêtement contenant des polyisocyanates comportant des groupes isocyanate liés de manière aliphatique, cycloaliphatique, araliphatique et/ou aromatique, contenant des structures de type thioallophanate de formule (I)

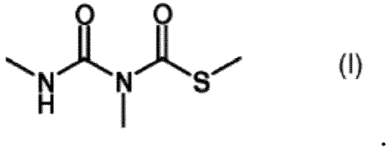

14. Agent de revêtement selon la revendication 13, **caractérisé en ce que** la teneur en structures de type thioallophanate de formule (I) est de 0,5 à 45 % en poids.

15. Substrats revêtus avec des agents de revêtement selon la revendication 13 ou 14.
